# FASCICULE DE BREVET EUROPEEN

(11) **EP 1 495 940 B1**
(45) Date de publication et mention de la délivrance du brevet: **26.12.2007**
(21) Numéro de dépôt: 04015325.6
(22) Date de dépôt: 30.06.2004
(51) Int. Cl.: B62D 1/19

(54) **Dispositif d'absorption d'énergie infiniment modulable d'une colonne de direction de véhicule automobile**
Stufenlos verstellbare Energieabsorptionseinrichtung für die Lenksäule eines Kraftfahrzeuges
Infinitely adjustable energy absorbing device for a motor vehicle steering column

(30) Priorité: 10.07.2003 FR 0308431
(43) Date de publication de la demande: 12.01.2005
(73) Titulaire: NACAM France S.A., 41100 Vendôme (FR)
(72) Inventeur: Ben Rhouma, Abdel Karim, 41100 Vendôme (FR); Laisement, André, 41290 La Chapelle Encherie (FR); Eymery, Vincent, 41100 Vendôme (FR)
(74) Mandataire: Cabinet Martinet & Lapoux

(56) Documents cités:
- EP-A- 1 180 467
- EP-A- 1 247 721
- WO-A-00/76833
- FR-A- 2 775 648
- FR-A- 2 788 029

## Description

La présente invention concerne un dispositif d'absorption d'énergie infiniment modulable d'une colonne de direction de véhicule automobile, ce dispositif d'absorption est dirigé suivant le sens de rétraction de la colonne de direction.

Le dispositif selon l'invention s'applique notamment à une colonne de direction réglable en profondeur ou en inclinaison ou bien à une colonne de direction réglable en profondeur et en inclinaison, dont l'arbre de direction est monté dans un tube-corps, qui est supporté et bloqué sur la carrosserie à la position voulue. La colonne de direction comprend un arbre de direction monté tournant dans un tube-corps, qui est relié à un ensemble support fixé au châssis du véhicule ou à un élément de la carrosserie. L'invention peut s'appliquer également à une colonne de direction non réglable ; dans ce cas, le tube-corps est monté directement dans l'ensemble support.

Lors d'un choc, une partie de l'énergie d'impact du conducteur sur le volant est absorbée par la colonne de direction. Celle-ci intègre en général des systèmes qui permettent d'amortir le mouvement du conducteur au moment de son impact sur le volant. Les systèmes montés aujourd'hui sur les véhicules de série, réagissent selon des lois fixes, et pré établies, quelles que soient les conditions du choc.

En réalité, la quantité d'énergie nécessaire pour freiner l'élan du conducteur lors d'un choc dépend de plusieurs paramètres, comme la vitesse du véhicule, le poids du conducteur, le port de la ceinture, etc... qui ne sont pas pris en compte par les systèmes d'absorption d'énergie existants.

Ces systèmes pénalisent certaines catégories de conducteurs qui ne font pas partie de la moyenne pour laquelle l'élément d'absorption d'énergie sur la colonne de direction a été calibré. Ces catégories sont en général les personnes de petites tailles et les personnes de très grosse taille. En effet, la personne de petite taille rencontre un obstacle rigide qui risquerait de lui causer des dommages corporels, et la personne de grosse taille n'est pas suffisamment freinée et risquerait de subir des dommages dus à une accélération trop importante de son corps lors du crash.

Des systèmes qui tiennent compte de certains paramètres comme le port de la ceinture de sécurité ou le poids du conducteur ont été imaginés par la demanderesse NACAM et font l'objet des brevets français FR 2788029 FR 2801269 et FR 2812262. Ces concepts permettent d'avoir un nombre discret de lois, en fonction du nombre d'éléments d'absorption d'énergie présents sur la colonne de direction.

Un autre système, décrit dans le document EP 1247721 A, met en oeuvre une bande métallique qui se déforme autour d'un axe support perpendiculaire au plan vertical de l'arbre de direction.

Ce document décrit notamment un dispositif d'absorption d'énergie d'une colonne de direction de véhicule automobile comportant un arbre de direction avec un volant de direction monté tournant autour d'un axe de direction dans un tube-corps, ladite colonne de direction étant montée dans un ensemble support comprenant un élément support fixe et un élément support mobile, en cas de choc, dans lequel est monté ledit tube-corps, ledit dispositif comportant:
- un ruban métallique unique qui comprend:
   une première portion sensiblement rectiligne dont une extrémité est raccordée à l'élément support mobile et dont l'autre extrémité se prolonge par
   une deuxième portion qui s'applique contre un rouleau relié à l'élément support fixe, afin que la deuxième portion soit déformée selon une forme demi-circulaire, et se prolonge par
   - une troisième portion dont l'extrémité est libre;
- un générateur d'effort relié à l'élément support mobile, disposé d'un côté de la portion de ruban concernée et capable de fournir un effort variable, afin de déformer le ruban métallique suivant une direction transversale audit ruban, en dehors de la deuxième portion de forme demi-circulaire
- ledit générateur d'effort agissant entre deux éléments d'appui reliés à l'élément support mobile et disposés de l'autre côté de la portion de ruban concernée;
- afin d'avoir un dispositif d'absorption d'énergie modulable.

Ceci améliore l'absorption d'énergie mais ne couvre pas toutes les situations de choc où certains paramètres sont spécifiques à chaque cas d'accident, comme la vitesse du véhicule avant le choc.

Le but de la présente invention est de proposer un dispositif d'absorption d'énergie qui est dirigé suivant le sens de rétraction de la colonne de direction, et qui soit infiniment modulable afin de pouvoir répondre à toutes les situations de choc, et de pouvoir protéger toutes les catégories de conducteurs notamment ceux qui ne font pas partie de la moyenne des conducteurs, tout en se montant facilement dans l'encombrement des colonnes de direction existantes.

Ce but est atteint grâce à un dispositif d'absorption d'énergie tel que défini dans la revendication 1.

La présente invention se rapporte à un dispositif d'absorption d'énergie d'une colonne de direction de véhicule automobile comportant un arbre de direction avec un volant de direction monté tournant autour d'un axe de direction dans un tube-corps. Ladite colonne de direction est montée dans un ensemble support comprenant un élément support fixe et un élément support mobile, en cas de choc, dans lequel est monté ledit tube-corps. Le dispositif comporte un fil métallique unique et un générateur d'effort. Le fil métallique unique comprend :
- une première portion sensiblement rectiligne dont une extrémité est raccordée à l'élément support mobile et dont l'autre extrémité se prolonge par
- une deuxième portion qui s'applique contre un rouleau relié à l'élément support fixe, afin que la deuxième portion soit déformée selon une forme demi-circulaire, et se prolonge par
- une troisième portion dont l'extrémité est libre.

Le générateur d'effort est relié à l'élément support fixe et est disposé d'un côté de la portion de fil concernée. Ledit générateur est capable de fournir un effort variable afin de déformer le fil métallique suivant une direction transversale audit fil, en dehors de la deuxième portion de forme demi-circulaire.

Le générateur d'effort agit entre deux éléments d'appui reliés à l'élément support fixe et disposé de l'autre côté de la portion de fil concernée, afin d'avoir un dispositif d'absorption d'énergie infiniment modulable qui s'adapte à chaque cas de choc.

Selon l'invention, le générateur d'effort peut agir soit sur la troisième portion du fil métallique qui est sensiblement rectiligne, ou soit sur la première portion du fil métallique. Dans ce dernier cas, la troisième portion du fil métallique peut être sensiblement rectiligne, ou enroulée autour du rouleau.

Dans ces différentes réalisations, le générateur d'effort agit entre deux éléments d'appui indépendants, ou entre un élément d'appui indépendant et un élément d'appui intégré au rouleau, ou entre un élément d'appui indépendant et un élément d'appui constitué par le rouleau.

Dans une architecture préférée de l'invention, l'élément support fixe comporte une embase avec deux montants sensiblement verticaux, et l'élément support mobile comporte deux montants sensiblement verticaux reliés par un élément de raccordement sensiblement parallèle à l'embase. Lesdits montants sont disposés et guidés, en cas de choc, entre les deux montants de l'élément support fixe.

Tous les montants sont orientés selon la direction du déplacement de l'élément support mobile en cas de choc. De plus, un trou oblong de guidage est agencé dans l'embase et est sensiblement parallèle aux montants et d'une longueur permettant le déplacement de l'élément support mobile.

Un élément d'accrochage du fil métallique est fixé sur l'élément de raccordement et traverse le trou oblong de guidage afin d'être relié à l'extrémité de la première portion du fil métallique. Ledit élément d'accrochage est agencé pour coulisser dans le trou oblong de guidage. Le rouleau est fixé sur l'embase ; et chaque élément d'appui indépendant est monté sur l'embase.

Plus précisément dans cette architecture, chaque montant de l'élément support fixe comporte un élément latéral muni d'un trou de fixation. Chaque montant de l'élément support mobile comporte un élément latéral avec un trou oblong débouchant, qui s'applique contre l'élément latéral et le trou de fixation correspondant de l'élément support fixe, les deux trous de fixation et les deux trous oblongs recevant un élément de fixation dans la structure du véhicule.

L'élément support fixe et l'élément support mobile sont raccordés par un ensemble de liaison qui comporte deux rondelles plastique et une rondelle métallique. La première rondelle plastique, disposée entre l'embase et l'élément de raccordement, reçoit un tenon cylindrique appartenant à la deuxième rondelle plastique disposée de l'autre côté de l'embase. Le tenon cylindrique traverse et coulisse dans le trou oblong de guidage. La rondelle métallique est placée sur la deuxième rondelle plastique. Un élément de fixation relie la rondelle métallique à l'élément de raccordement, afin d'avoir le serrage voulu pour permettre le coulissement de l'élément support mobile en cas de choc.

Dans cette architecture de l'invention, le rouleau peut être disposé à gauche ou à droite de l'axe du trou oblong de guidage.

L'extrémité de la première portion du fil est conformée pour obtenir un crochet entourant complètement l'élément d'accrochage ; la longueur axiale du logement du crochet étant plus grande que la longueur axiale de l'élément d'accrochage pour avoir un retard de l'action du dispositif d'absorption d'énergie en cas de choc.

Chaque élément d'appui indépendant est un petit rouleau entouré d'une couronne plastique et est monté sur un axe fixé à l'embase ; et le rouleau est entouré d'une couronne plastique et comporte un pion de centrage.

Avantageusement selon l'invention, le dispositif comporte une plaque de fermeture qui est constituée par une embase qui recouvre le fil métallique et l'embase de l'élément support fixe, et par deux montants qui entourent les montants de l'élément support fixe. Chaque montant est muni d'un élément latéral qui s'applique contre un élément latéral correspondant de l'élément support fixe. Chaque groupe de deux éléments latéraux est muni chacun d'un trou de fixation recevant un élément de fixation dans la structure du véhicule. Ladite plaque de fermeture est mise en place par le pion de centrage, et par le ou les axes du ou des petit(s) rouleau(x) d'appui, et est fixé sur l'embase par la vis de fixation du rouleau.

De plus afin de guider le fil métallique, ledit fil métallique coulisse contre un élément de frottement qui s'accroche sur un des deux montants de la plaque de fermeture.

Le dispositif d'absorption d'énergie infiniment modulable d'une colonne de direction selon l'invention présente aussi l'avantage d'avoir une structure basée sur un fil métallique unique, qui est très simple à réaliser en très grande série dans l'industrie automobile. De plus, le dispositif est particulièrement peu encombrant et peut s'agencer aisément entre l'élément support fixe et l'élément mobile. Le dispositif est aussi très souple car il est possible de prévoir la position du générateur d'effort la plus adaptée à l'architecture du véhicule, le générateur d'effort pouvant être d'un type quelconque. Enfin, le dispositif d'absorption d'énergie étant infiniment modulable, il peut convenir à tous les types de choc et à toutes les catégories de conducteurs quel que soit leur poids et leur taille.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est une vue latérale selon l'axe de direction d'une colonne de direction dans laquelle est monté le dispositif d'absorption d'énergie selon l'invention ;
- la figure 2 est une vue de dessus en perspective de l'ensemble du dispositif d'absorption d'énergie selon l'invention ; l'ensemble étant en position de conduite normale avant un choc ;
- la figure 3 est une vue analogue à la figure 2 du dispositif complet ;
- la figure 4 est une vue de dessus de la figure 2 d'un autre mode de réalisation ;
- la figure 4A est une vue de détail de la figure 4 d'une variante de réalisation ;
- la figure 5 est une coupe suivant le plan V-V de la figure 4 ;
- la figure 6 est une coupe suivant le plan VI-VI de la figure 4 ;
- les figures 7, 7A et 8 sont des vues analogues à la figure 4 de variantes de réalisation,
- les figures 9, 10, 11 et 12 sont des vues analogues à la figure 4, des variantes d'une autre architecture de l'invention.

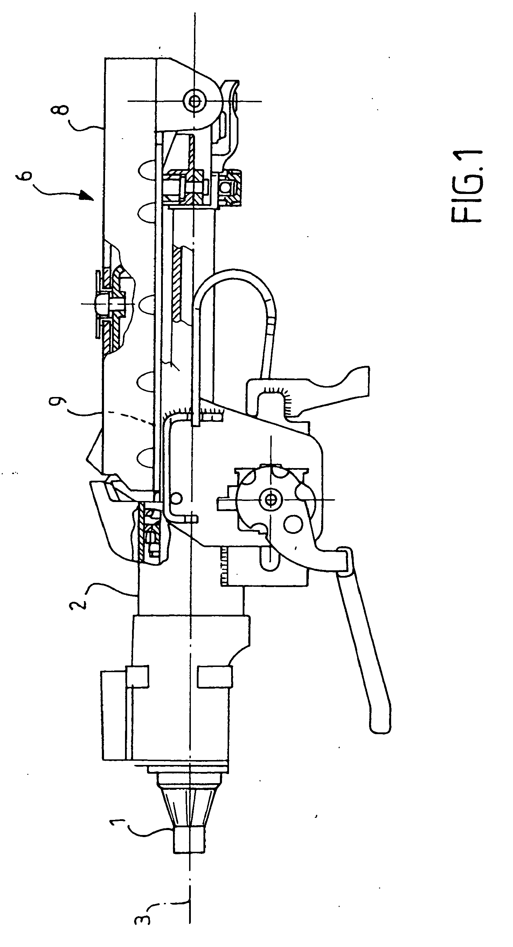

Comme on peut le voir sur la figure 1, la colonne de direction de véhicule automobile comprend un arbre de direction 1 qui est monté tournant dans un tube-corps 2 autour d'un axe de direction 3. Le tube-corps 2 est relié à un ensemble support 6 par un système de réglage en position en profondeur ou en inclinaison, ou par un système de réglage en profondeur et en inclinaison. L'invention peut s'appliquer également à une colonne de direction non réglage, dans ce cas le tube-corps 2 est relié directement à l'ensemble support 6.

L'ensemble support 6 comprend un élément support fixe 8 et un élément support mobile 9. L'élément support fixe 8 est solidaire du châssis du véhicule ou d'un élément de carrosserie. L'élément support mobile 9 est relié au tube-corps 2 par le système de réglage en position. L'élément support mobile 9 est relié à l'élément support fixe 8, et ledit élément support mobile 9 est bloqué sur ledit élément support fixe à une valeur déterminée, qui tient compte du choc à absorber afin de permettre dans ce cas à l'élément support mobile 9 de coulisser dans l'élément support fixe 8.

L'ensemble support 6 est l'ensemble de fixation supérieure de la colonne de direction. Un ensemble de fixation inférieure de la colonne de direction comporte un axe d'articulation horizontal, qui permet le réglage en hauteur de ladite colonne.

On appellera plan vertical : un plan qui est parallèle au plan vertical passant par l'axe de direction.

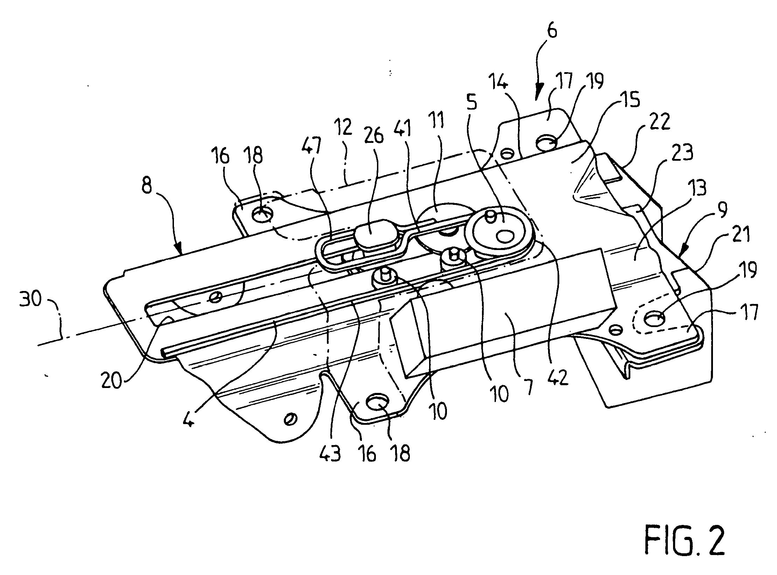

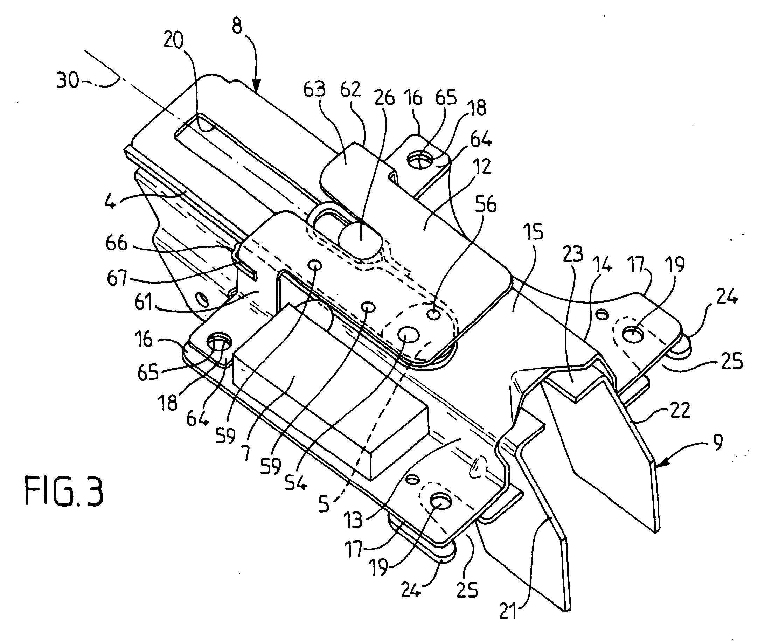

Comme cela est représenté notamment sur les figures 2 et 3, l'élément support fixe 8 comporte une embase 15 avec un montant 13 et un montant 14 à chacune de ses extrémités transversales ; les montants 13 et 14 étant sensiblement verticaux et perpendiculaires à l'embase 15.

Dans la suite de la description, on appellera arrière le côté du volant de direction, et avant le côté opposé c'est-à-dire celui du boîtier de direction situé du côté de l'avant du véhicule. On appellera gauche et droite ce qui est à la gauche ou à la droite du conducteur.

Chaque montant 13 et 14 de l'élément support fixe 8 comporte à l'arrière un élément latéral 17 muni d'un trou de fixation 19. Chaque montant 13 et 14 comporte à l'avant un élément latéral 16 muni d'un trou de fixation 18 recevant une vis de fixation dans la structure du véhicule.

L'élément support mobile 9 comporte un élément de raccordement 23 avec un montant 21 et un montant 22 à chacune de ses extrémités transversales, les montants 21 et 22 étant sensiblement verticaux et perpendiculaires à l'élément de raccordement 23.

L'élément support mobile 9 est disposé entre les montants 13 et 14 de l'élément support fixe 8. L'élément de raccordement 23 est sensiblement parallèle à l'embase 15, et les deux montants 21 et 22 sont guidés, et coulissent, en cas de choc, entre les deux montants 13 et 14 de l'élément support fixe 8.

Les montants 13 et 14 ainsi que les montants 21 et 22 sont orientés selon la direction du déplacement en cas de choc de l'élément support mobile 9.

Chaque montant 21 et 22 de l'élément support mobile 9 comporte à l'arrière un élément latéral 24 muni d'un trou oblong débouchant 25. Chaque élément latéral 24 avec le trou oblong débouchant 25 s'applique contre l'élément latéral 17 avec le trou de fixation 19 correspondant de l'élément support fixe 8.

Chaque groupe d'un trou de fixation 19 et d'un trou oblong débouchant 25 reçoit une vis de fixation dans la structure du véhicule. Une capsule de récupération d'énergie peut être disposée entre chaque élément latéral 17 et l'élément latéral 24 correspondant.

Un trou oblong de guidage 20 d'axe 30 est agencé dans l'embase 15. L'axe 30 et les bords latéraux du trou oblong 20 sont sensiblement parallèles aux montants 13 et 14 de l'élément support fixe 8.

Un élément d'accrochage 26 est fixé sur l'élément de raccordement 23 de l'élément support mobile 9, et il traverse le trou oblong de guidage 20. L'élément d'accrochage 26 est dimensionné pour coulisser dans le trou oblong de guidage 20. Ledit trou oblong de guidage 20 doit avoir une longueur axiale suffisante pour permettre le déplacement de l'élément d'accrochage 26 de l'élément support mobile 9, en cas de choc.

L'élément support fixe 8 et lélément support mobile 9 sont raccordés en un troisième point, en plus des deux points des deux groupes de trous 19 et 25.

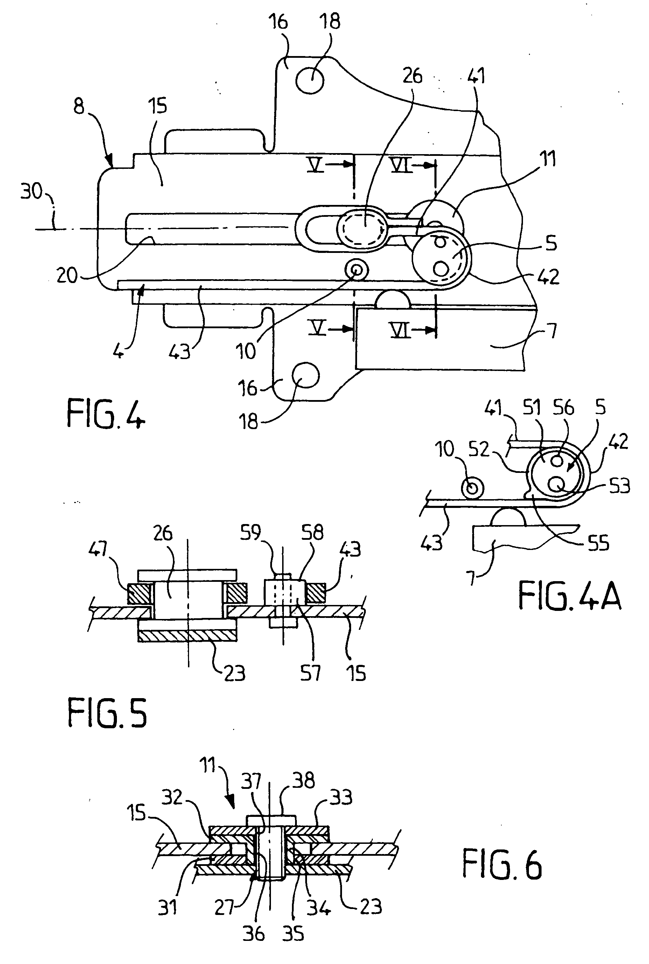

Le troisième point est matérialisé par un ensemble de liaison 11, qui est représenté sur les figures d'ensemble 2, 3 et 4 et sur la coupe axiale de la figure 6. Comme cela est représenté sur la figure 6, l'ensemble de liaison 11 comporte deux rondelles plastique 31 et 32, une rondelle métallique 33 et une vis de fixation 38 qui ont un même axe disposé dans le plan vertical de l'axe 30 et perpendiculaire à l'embase 15. Tout en restant dans le cadre de l'invention, il peut y avoir d'autre point de guidage de la colonne lors de son déplacement.

La première rondelle plastique 31 est disposée entre l'embase 15 de l'élément support fixe 8 et l'élément de raccordement 23 de l'élément support mobile 9. La deuxième rondelle plastique 32 est disposée de l'autre côté de l'embase 15, et elle est munie d'un tenon cylindrique 34 qui traverse et coulisse dans le trou oblong de guidage 20 en cas de choc. Le tenon cylindrique 34 s'engage dans un trou 35 de la première rondelle plastique 31.

La rondelle métallique 33 est placée sur la deuxième rondelle plastique 32. La rondelle métallique 33, et le tenon cylindrique 34 ont respectivement un trou de passage 37 et 36, qui reçoivent un élément de fixation du type vis de fixation 38, qui s'applique contre la rondelle métallique 33 et qui se fixe dans un trou de fixation 27 de l'élément de raccordement 23.

La vis de fixation 38 relie la rondelle métallique 33 à l'élément de raccordement 23, afin d'avoir le serrage voulu des deux rondelles plastique 31 et 32 sur l'embase 15, pour permettre le coulissement de l'élément support mobile 9 en cas de choc.

Selon l'invention, le dispositif d'absorption d'énergie comporte un fil métallique unique 4 et un générateur d'effort 7 comme cela est représenté sur les figures 2, 4 et 7 à 12.

Le fil métallique unique 4 comprend une première portion 41, une deuxième portion 42 et une troisième portion 43 ou 44 suivant sa forme. La première portion 41 a une première extrémité 45 et une deuxième extrémité 46, et la deuxième portion 42 a une deuxième extrémité 49.

La première portion 41 est sensiblement rectiligne avec sa première extrémité 45 qui est raccordée à l'élément support mobile 9. La deuxième extrémité 46 se prolonge par la première extrémité de la deuxième portion 42.

La deuxième portion 42 a sa deuxième extrémité 49 qui se prolonge par la troisième portion 43 ou 44. La deuxième portion 42 s'applique contre un rouleau 5 relié à l'élément support fixe 8, afin que la deuxième portion 42 soit déformée selon une forme demi-circulaire, qui se prolonge par la troisième portion 43 ou 44 dont l'extrémité est libre.

Le générateur d'effort 7 est relié à l'élément support fixe 8. Ledit générateur d'effort 7 est disposé d'un côté de la portion de fil métallique 4 concerné ; et il est capable de fournir un effort variable afin de déformer le fil métallique 4 suivant une direction transversale audit fil. Cette action a lieu en dehors de la deuxième portion 42 de forme demi-circulaire et elle s'effectue selon une direction sensiblement perpendiculaire au fil métallique 4. Le générateur d'effort 7 agit entre deux éléments d'appui 10, qui sont reliés à l'élément support fixe 8 et qui sont disposés de l'autre côté de la portion 41 ou 43 de fil concerné.

L'architecture de l'invention permet ainsi d'avoir un dispositif d'absorption d'énergie infiniment modulable qui s'adapte à chaque cas de choc. De plus, le générateur d'effort 7 peut avoir différentes réalisations et notamment une réalisation pyrotechnique.

Comme cela est représenté notamment sur les figures 4, 5 et 7, la première extrémité 45 de la première portion 41 du fil métallique 4 est relié à l'élément d'accrochage 26 de l'élément de raccordement 23, qui coulisse dans le trou oblong de guidage 20 de l'embase 15.

La première extrémité 45 de la première portion 41 du fil 4 est conforme pour obtenir une boucle ou crochet 47, qui entoure complètement l'élément d'accrochage 26.

Le crochet 47 a un logement 48 qui a une longueur axiale plus grande que la longueur axiale de l'élément d'accrochage 26.

Cette différence de longueur permet d'avoir une course en cas de choc, qui s'effectue avant l'entrée en action du dispositif d'absorption d'énergie de l'invention, qui opère avec un certain retard prédéterminé.

Comme cela est représenté sur la figure 4A, le rouleau 5 est fixé sur l'embase 15. Il est constitué par un grand rouleau 51 entouré d'une couronne plastique 52. Le grand rouleau 51 est fixé sur l'embase 15 et il comporte un pion de centrage 56 et un trou 53 pour une vis de fixation 54 dans le rouleau 5.

Comme cela est représenté sur la figure 5, chaque élément d'appui 10, qui est indépendant, est monté sur l'embase 15. Chaque élément d'appui 10 indépendant est constitué par un petit rouleau 57, qui est entouré d'une couronne plastique 58. Le petit rouleau 57 est monté sur un axe 59 qui est fixé à l'embase 15.

Le dispositif de l'invention comporte enfin une plaque de fermeture 12 qui permet de maintenir le dispositif en place lors du transport et lors du montage dans le véhicule, elle permet également le guidage du fil métallique 4 lors du choc.

La plaque de fermeture 12 comporte une embase 63 qui recouvre le fil métallique 4, le rouleau 5, les éléments d'appui 10, l'ensemble de liaison 11 et l'embase 15 de l'élément support fixe 8. L'embase 63 est munie à chacune de ses extrémités transversales d'un montant 61 et d'un montant 62, qui sont perpendiculaires à l'embase 63 et qui entourent les montants 13 et 14 de l'élément support fixe 8. Chaque montant 61 et 62 est muni d'un élément latéral 64, qui s'applique contre l'élément latéral 16 de l'élément support fixe 8. Chaque groupe de deux éléments latéraux 61-16 et 62-16 est muni chacun d'un trou de fixation 65 et 18 qui reçoit une vis de fixation dans la structure du véhicule. Pour le transport et le montage sur véhicule, la plaque de fermeture 12 est mise en place par le pion de centrage 56, et par le ou les axes 59 du ou des petits rouleaux 57 d'appui. La plaque de fermeture 12 est fixée sur l'embase 15 par la vis de fixation 54 du rouleau 5.

De plus, la plaque de fermeture 12 comporte un élément de frottement 66 muni d'un organe d'accrochage 67, qui se monte sur l'un des deux montants 61 ou 62. Le fil métallique 4 peut ainsi coulisser entre l'élément de frottement 66 et être ainsi guidé.

La plaque de fermeture vient couvrir le mécanisme d'absorption d'énergie. Elle sert également comme support ou guide pour le brin libre du fil métallique 4 afin d'éviter qu'il se déforme lors du choc.

En situation normale de conduite, la partie mobile en cas de choc de la colonne est liée à la partie fixe de celle-ci par l'intermédiaire des deux capsules et du troisième point situé dans l'axe de la colonne. Un retard au déplacement est aménagé entre la boucle du fil métallique 4 et la partie mobile de la colonne, pour permettre lors d'un choc, la rupture des capsules sans efforts supplémentaires.

En dehors de la situation de choc, le doigt du générateur d'effort 7 est rentré, et aucun effort de poussée n'est appliqué sur le fil métallique dans cette condition. Ceci est également vrai dans le cas d'un choc peu énergétique, qui ne nécessite pas le fonctionnement du générateur d'effort 7, ou également dans le cas de non fonctionnement de ce dernier. Dans ces deux dernières conditions, une absorption d'énergie minimale est assurée sur la colonne de direction. Elle est donnée par la loi de comportement du fil métallique, selon son implantation sur la colonne.

En revanche, lors d'un choc sévère, l'unité électronique de commande reçoit les informations provenant des différents capteurs placés sur le véhicule (vitesse du véhicule immédiatement avant le choc, poids du conducteur, port de la ceinture de sécurité, etc...), nécessaires pour le calcul de la loi de commande du générateur d'effort 7. Selon la loi de commande élaborée par l'unité électronique, le générateur d'effort 7 exerce un effort latéral plus ou moins important sur le fil, pour freiner son déplacement, et adapter par conséquent, la quantité d'énergie absorbée par la colonne de direction à la situation du choc. Le différentiel d'énergie obtenu par la poussée du générateur d'effort 7 provient de la combinaison de deux phénomènes, de déformation et de frottement du fil entre le doigt du générateur d'effort 7 et les éléments d'appui 10.

La modulation de l'effort d'absorption peut alors être infiniment variable en fonction des lois de commande élaborées par l'électronique, qui tient compte des valeurs spécifiques des différents paramètres associés au choc.

L'électronique calcule la loi de commande du générateur d'effort 7 en tenant compte de la course totale de rétraction aménagée sur la colonne. L'énergie de choc est alors répartie sur toute la course disponible sur la colonne, pour réduire le niveau d'effort appliqué sur le corps du conducteur, et réduire par conséquent les risques de blessures.

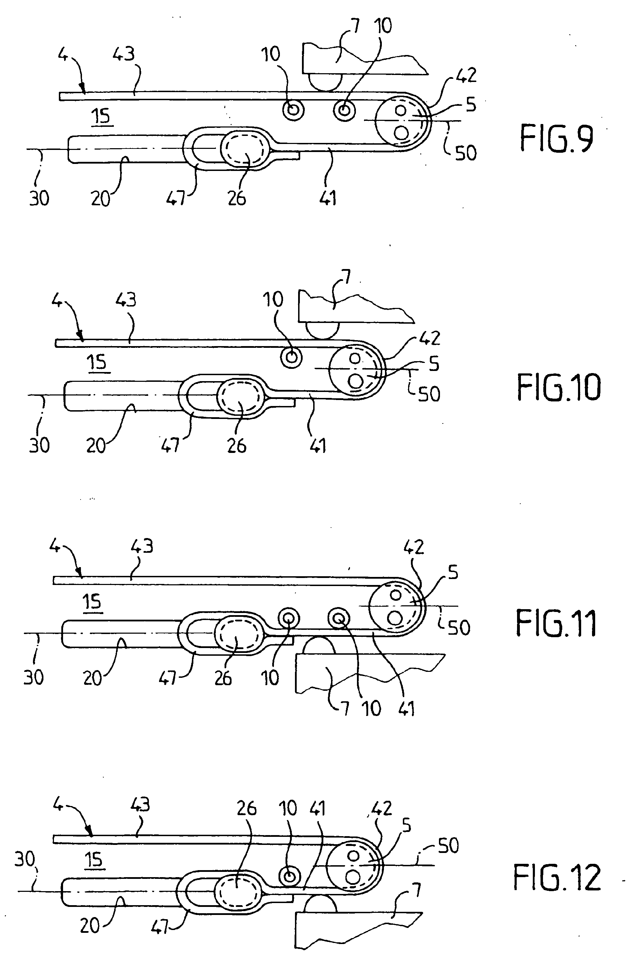

Le dispositif de l'invention est très souple et il permet tous les types d'agencement. Ainsi, le rouleau 5 peut être disposé à gauche de l'axe 30 du trou oblong de guidage 20 comme sur les figures 2 à 8. Le rouleau 5 peut également être disposé à droite de l'axe 30 du trou oblong de guidage comme sur les figures 9 à 12.

Dans les deux configurations ci-dessus du rouleau 5, le générateur d'effort 7 peut s'appliquer sur la troisième portion 43 du fil métallique 4 qui est sensiblement rectiligne, comme sur les figures 1 à 6 et 9 et 10.

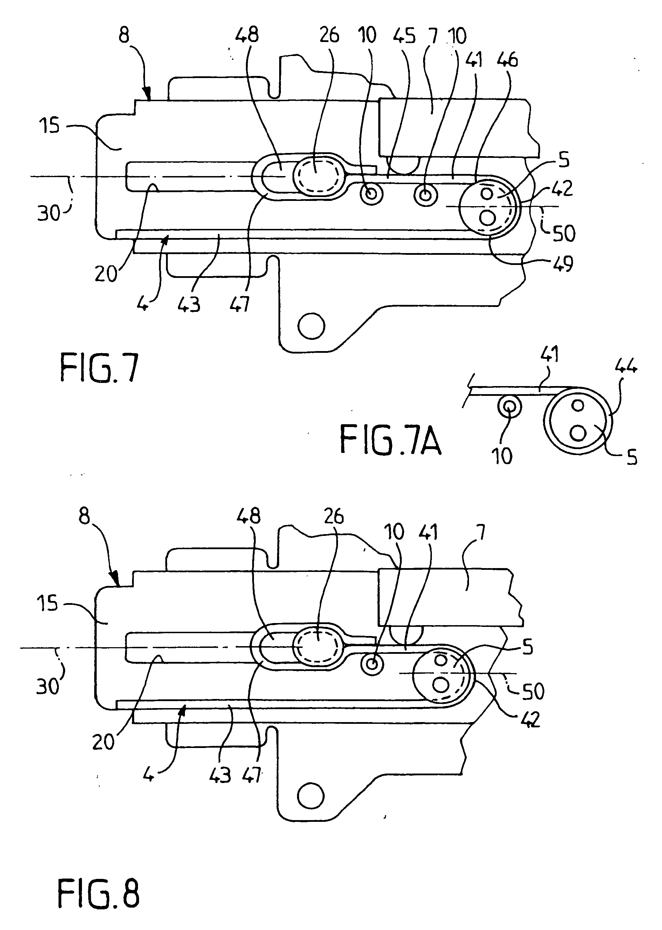

Dans les deux configurations du rouleau 5, le générateur d'effort 7 peut s'appliquer sur la première portion 41 du fil métallique 4, comme c'est le cas des figures 7, 7A, 8, 11 et 12.

Dans ces derniers types de montage, la troisième portion 43 du fil métallique 4 peut être sensiblement rectiligne, comme c'est le cas des figures 1 à 7 et 8 à 12, ou la troisième portion 44 du fil métallique 4 est enroulée autour du rouleau 5, comme c'est le cas de la figure 7A.

Les deux appuis 10 peuvent avoir plusieurs types de réalisations.

Dans un premier type de réalisation, le générateur d'effort 7 agit entre deux éléments d'appui indépendants 10, comme sur les figures 2, 3, 7, 9 et 11.

Dans un deuxième type de réalisation, le générateur d'effort 7 agit entre un élément d'appui indépendant 10 et un élément d'appui intégré 55 au rouleau 5, comme c'est le cas de la figure 4A.

Dans un troisième type de réalisation, le générateur d'effort agit entre un élément d'appui indépendant 10 et un élément d'appui constitué par le rouleau 5, comme sur les figures 4, 7A, 8, 10 et 12.

## Revendications

1. Dispositif d'absorption d'énergie d'une colonne de direction de véhicule automobile comportant un arbre de direction (1) avec un volant de direction monté tournant autour d'un axe de direction (3) dans un tube-corps (2), ladite colonne de direction étant montée dans un ensemble support (6) comprenant un élément support fixe (8) et un élément support mobile (9), en cas de choc, dans lequel est monté ledit tube-corps (2), dispositif dans lequel :
- l'élément support fixe (8) comporte une embase (15) avec deux montants (13, 14) sensiblement verticaux ;
- l'élément support mobile (9) comporte deux montants (21, 22) sensiblement verticaux reliés par un élément de raccordement (23) sensiblement parallèle à l'embase (15), lesdits montants (21, 22) sont disposés et guidés entre les deux montants (13, 14) de l'élément support fixe (8) en cas de choc ;
- les montants (13, 14, 21, 22) sont orientés selon la direction du déplacement de l'élément support mobile (9) en cas de choc ;
- un fil métallique unique (4) est disposé à l'extérieur et contre l'embase (15) de l'élément support fixe (8) ledit fil comprenant :
. une première portion (41) sensiblement rectiligne dont une extrémité (45) est raccordée à l'élément support mobile (9) et dont l'autre extrémité (46) se prolonge par
. une deuxième portion (42) qui s'applique contre un rouleau (5) fixé sur l'embase (15) de l'élément support fixe (8), afin que la deuxième portion (42) soit déformée selon une forme demi-circulaire, et se prolonge par
. une troisième portion (43, 44) dont l'extrémité est libre ;
- un trou oblong de guidage (20) agencé dans l'embase (15) est sensiblement parallèle aux montants (13, 14) et d'une longueur permettant le déplacement de l'élément support mobile (9) ;
- un élément d'accrochage (26) du fil métallique (4) est fixé sur l'élément de raccordement (23) et traverse le trou oblong de guidage (20) afin d'être relié à l'extrémité (45) de la première portion (41) du fil métallique (4), ledit élément d'accrochage (26) étant agencé pour coulisser dans le trou oblong de guidage (20);
- un générateur d'effort (7) relié à l'élément support fixe (8) est disposé d'un côté de la portion de fil (4) concernée et capable de fournir un effort variable, afin de déformer le fil métallique (4) suivant une direction transversale audit fil, en dehors de la deuxième portion (42) de forme demi-circulaire ;
- ledit générateur d'effort (7) agissant entre deux éléments d'appui (10) montés sur l'embase (15) de l'élément support fixe (8) et disposés de l'autre côté de la portion de fil concernée ;
- afin d'avoir un dispositif d'absorption d'énergie infiniment modulable qui s'adapte à chaque cas de choc.

2. Dispositif d'absorption d'énergie selon la revendication 1, **caractérisé en ce que** le générateur d'effort (7) agit sur la troisième portion (43) du fil métallique (4) qui est sensiblement rectiligne.

3. Dispositif d'absorption d'énergie selon la revendication 1, **caractérisé en ce que** le générateur d'effort (7) agit sur la première portion (41) du fil métallique (4).

4. Dispositif d'absorption d'énergie selon la revendication 3, **caractérisé en ce que** la troisième portion (43) du fil métallique (4) est sensiblement rectiligne.

5. Dispositif d'absorption d'énergie selon la revendication 3, **caractérisé en ce que** la troisième portion (44) du fil métallique (4) est enroulée autour du rouleau (5).

6. Dispositif d'absorption d'énergie selon l'une des revendications 2 et 3, **caractérisé en ce que** le générateur d'effort (7) agit entre deux éléments d'appui indépendants (10).

7. Dispositif d'absorption d'énergie selon l'une des revendications 2 et 3, **caractérisé en ce que** le générateur d'effort (7) agit entre un élément d'appui indépendant (10) et un élément d'appui intégré (55) au rouleau (5).

8. Dispositif d'absorption d'énergie selon l'une des revendications 2 et 3, **caractérisé en ce que** le générateur d'effort (7) agit entre un élément d'appui indépendant (10) et un élément d'appui constitué par le rouleau (5).

9. Dispositif d'absorption d'énergie selon l'une quelconque des revendications précédentes, **caractérisé en ce que**
- chaque montant (13, 14) de l'élément support fixe (8) comporte un élément latéral (17) muni d'un trou de fixation (19) ;
- chaque montant (21, 22) de l'élément support mobile (9) comporte un élément latéral (24) avec un trou oblong débouchant (25), qui s'applique contre l'élément latéral (17) et le trou de fixation (19) correspondant de l'élément support fixe (8), les deux trous de fixation (19) et les deux trous oblongs (25) recevant un élément de fixation dans la structure du véhicule ;
- l'élément support fixe (8) et l'élément support mobile (9) sont raccordés par un ensemble de liaison (11) qui comporte :
. une première rondelle plastique (31), disposée entre l'embase (15) et l'élément de raccordement (23), reçoit un tenon cylindrique (34) appartenant à une deuxième rondelle plastique (32) disposée de l'autre côté de l'embase (15), le tenon cylindrique (34) traversant et coulissant dans le trou oblong de guidage (20) ;
. une rondelle métallique (33) placée sur la deuxième rondelle plastique (32): et
. un élément de fixation (38) reliant la rondelle métallique (33) à l'élément de raccordement (23), afin d'avoir le serrage voulu pour permettre le coulissement de l'élément support mobile (9) en cas de choc.

10. Dispositif d'absorption d'énergie selon la revendication 9, **caractérisé en ce que** le rouleau (5) est disposé à gauche de l'axe (30) du trou oblong de guidage (20).

11. Dispositif d'absorption d'énergie selon la revendication 9, **caractérisé en ce que** le rouleau (5) est disposé à droite de l'axe (30) du trou oblong de guidage (20).

12. Dispositif d'absorption d'énergie selon la revendication 9, **caractérisé en ce que** l'extrémité (45) de la première portion (41) du fil (4) est conformée pour obtenir un crochet (47) entourant complètement l'élément d'accrochage (26) ; la longueur axiale du logement (48) du crochet (47) étant plus grande que la longueur axiale de l'élément d'accrochage (26) pour avoir un retard de l'action du dispositif d'absorption d'énergie en cas de choc.

13. Dispositif d'absorption d'énergie selon la revendication 9, **caractérisé en ce que**:
- chaque élément d'appui indépendant (10) est un petit rouleau (57) entouré d'une couronne plastique (58) et est monté sur un axe (59) fixé à l'embase (15) ; et
- le rouleau (5) est entouré d'une couronne plastique (52) et comporte un pion de centrage (56).

14. Dispositif d'absorption d'énergie selon la revendication 9, **caractérisé en ce qu'**il comporte une plaque de fermeture (12) qui est constituée par une embase (63) qui recouvre le fil métallique (4) et l'embase (15) de l'élément support fixe (8), et par deux montants (61, 62) qui entourent les montants (13, 14) de l'élément support fixe (8), chaque montant (61, 62) étant muni d'un élément latéral (64) qui s'applique contre un élément latéral (16) correspondant de l'élément support fixe (8), chaque groupe de deux éléments latéraux (61,16-62,16) étant muni chacun d'un trou de fixation recevant un élément de fixation dans la structure du véhicule, ladite plaque de fermeture (12) étant mise en place par le pion de centrage (56), et par le ou les axes (59) du ou des petit(s) rouleau(x) d'appui (57), et étant fixé sur l'embase (15) par la vis de fixation (54) du rouleau (5).

15. Dispositif d'absorption d'énergie selon la revendication 14, **caractérisé en ce que** le fil métallique (4) coulisse contre un élément de frottement (66) qui s'accroche sur un des deux montants (61, 62) de la plaque de fermeture (12).

16. Dispositif d'absorption d'énergie selon l'une quelconque des revendications précédentes, **caractérisé en ce que** le générateur d'effort (7) est un générateur pyrotechnique.

## Claims

1. A device for the absorption of energy of an automotive vehicle steering column including a steering shaft
(1) with a steering wheel rotatably mounted about an steering axis (3) in a tubular body (52), said steering column being mounted in a support system (6) including a fixed support element (8) and a movable support element (9), in case of impact, device in which:
- the fixed support member (8) includes a base (15) having two substantially vertical side walls (13, 14) ;
- the movable support member (9) includes two substantially vertical side walls (21, 22) connected by a connection element (23) substantially parallel to the base (15), said side walls (21, 22) are arranged and guided between the two side walls (13, 14) of the fixed support (8) in case of impact ;
- the side walls (13, 14, 21, 22) are oriented along the direction of displacement of the movable support element (9) in case of impact ;
- a single metallic wire (4) is disposed outside and against the base (15) of the fixed support (8), said wire including:
a first substantially straight portion (41) whose end (45) is connected to the movable support element (9) and whose other end (46) is extended by
a second portion (42) that is applied against a cylinder (5) linked to the base (15) of the fixed support element (8), whereby the second portion (42) is deformed in a semicircular manner and is extended by
. a third wire portion (43, 44) whose end is free ;
- an oblong guide hole (20) arranged in the base (15) extends substantially parallel to the side walls (13, 14) and has a length permitting the displacement of the movable support element (9) ;
- a hitching element (26) of the metallic wire (4) is attached to the connection element (23) and extends through the oblong guide hole (20) so as to be linked to the end (45) of the first portion (41) of the metallic wire (4), said hitching element (26) being arranged to slide in the oblong guide hole (20) ;
- a force generator (7) connected with the fixed support element (8) is arranged on one side of the portion of the wire (4) concerned and can supply a variable force so as to deform the metallic wire (4) along a direction transverse to said wire apart from the second portion (42) with a semicircular shape ;
- said force generator (7) operating between two support members (10) mounted on the base (15) of the fixed support element (8) and arranged on the other side of the wire portion concerned ;
- thereby to provide an infinitely modulatable energy absorption device that adapts to each impact situation.

2. An energy absorption device as claimed in claim 1, **characterized in that** the force generator (7) operates on the third portion (43) of the metallic wire (4) which is substantially straight.

3. An energy absorption device as claimed in claim 1, **characterized in that** the force generator (7) operates on the first portion (41) of the metallic wire (4).

4. An energy absorption device as claimed in claim 3, **characterized in that** the third portion (43) of the metallic wire (4) is substantially straight.

5. An energy absorption device as claimed in claim 3, **characterized in that** the third portion (44) of the metallic wire (4) is rolled up around the cylinder (5).

6. An energy absorption device as claimed in one of claims 2 and 3, **characterized in that** the force generator (7) operates between two independent support members (10).

7. An energy absorption device as claimed in one of claims 2 and 3, **characterized in that** the force generator (7) operates between an independent support member (10) and a support member (55) integrated into the cylinder (5).

8. An energy absorption device as claimed in one of claims 2 and 3, **characterized in that** the force generator (7) operates between an independent support member (10) and a support member made up of the cylinder (5).

9. An energy absorption device as claimed in any one of previous claims, **characterized in that**
- each side wall (13, 14) of the fixed support element (8) includes a lateral element (17) equipped with a fastening hole (19) ;
- each side wall (21, 22) of the movable support element (9) comprises a lateral element (24) with an oblong outlet hole (25), which is applied against the lateral element (17) and the corresponding mounting hole (19) of the fixed support element (8), the two mounting holes (19) and the two oblong holes (25) receiving a fastening element of the vehicle structure;
- the fixed support element (8) and the movable support element (9) are linked by a connection assembly (11) which comprises :
. a metallic washer (31), arranged between the base (15) and the connection element (23), receives a cylindrical sleeve portion (34) of a second synthetic plastic washer (32) arranged on the other side of the base (15), the cylindrical sleeve portion (34) extending through and sliding within the oblong guide hole (20) ;
. a metallic washer (33) placed on the second plastic washer (32) ; and
. a fastening element (38) connecting the metallic washer (33) to the connecting element (23) so as to obtain the desired tightening to make it possible for the movable support element(9) to slide in case of impact.

10. An energy absorption device as claimed in claim 9, **characterized in that** the cylinder (5) is arranged to the left of the axis (30) of the oblong guide hole (20).

11. An energy absorption device as claimed in claim 9, **characterized in that** the cylinder (5) is arranged to the right of the axis (30) of the oblong guide hole (20).

12. An energy absorption device as claimed in claim 9, **characterized in that** the end (45) of the first portion (41) of the wire (4) is so shaped as to define a hook (47) completely surrounding the hitching element (26) ; the axial length of the housing (48) of the hook (47) being greater than the axial length of the hitching element (26), thereby to provide a delay in the action of the energy absorption device in case of impact.

13. An energy absorption device as claimed in claim 9, **characterized in that**:
- each independent support member (10) is a small cylinder (57) surrounded by a plastic sleeve (58) and is mounted on an axle (59) fixed upon the base (15) ; and
- the cylinder (5) is surrounded by a synthetic plastic sleeve (52) and comprises a centering pin (56).

14. An energy absorption device as claimed in claim 9, **characterized in that** it includes a cover plate (12) which consists of a base (63) that covers the metallic wire (4) and the base (15) of the fixed support element (8), as well as two side walls (61, 62) that surround the side walls (13, 14) of the fixed support element (8), each side wall (61, 62) is equipped with a lateral element (64) that is applied against a corresponding lateral element (16) of the fixed support element (8), each group of two lateral elements (61,16-62,16) being each equipped with a fixation hole receiving a fixation element in the vehicle structure, said cover plate (12) being mounted in place by the centering pin (56), and by the axle or axles (59) of the small support cylinder (57), and being fixed upon the base (15) by the mounting screw (54) of the cylinder (5).

15. An energy absorption device as claimed in claim 14, **characterized in that** the metallic wire (4) slides against a friction element (66) which is hooked onto one of the two side walls of the cover plate (12).

16. An energy absorption device as claimed in any one of previous claims, **characterized in that** the force generator (7) is a pyrotechnic force generator.

## Patentansprüche

1. - Energieabsorptionsvorrichtung für eine Lenksäule eines Kraftfahrzeuges, bestehend aus einer Lenkwelle (1) mit einem drehend um eine Lenkachse (3) montierten Lenkrad in einem Rohrkörper (2), wobei die Lenksäule in eine Stützeinheit (6), bestehend aus einem im Falle eines Zusammenstoßes feststehenden Trageelement (8) und einem im Falle eines Zusammenstoßes beweglichen Trageelement (9), montiert ist und der Rohrkörper (2) in der Stützeinheit (6) sitzt; bei dieser Energieabsorptionsvorrichtung:
- umfasst das feststehende Trageelement (8) ein Fußteil (15) mit zwei im Wesentlichen vertikalen Schenkeln (13, 14);
- umfasst das bewegliche Trageelement (9) zwei im Wesentlichen vertikale Schenkel (21, 22), die durch ein im Wesentlichen zum Fußteil (15) paralleles Verbindungsteil (23) verbunden sind, wobei die Schenkel (21, 22) zwischen den beiden Schenkeln (13, 14) des im Falle eines Zusammenstoßes feststehenden Trageelements (8) angeordnet und geführt sind;
- sind die Schenkel (13, 14, 21, 22) in der Verschieberichtung des im Falle eines Zusammenstoßes beweglichen Trageelements (9) ausgerichtet;
- ist ein einziger Metalldraht (4) außen gegen das Fußteil (15) des feststehenden Trageelements (8) angeordnet, wobei dieser Draht Folgendes umfasst:
. ein im Wesentlichen gerades erstes Teilstück (41), von dem das eine Ende (45) mit dem beweglichen Trageelement (9) verbunden ist und das andere Ende (46) verlängert wird durch
. ein zweites Teilstück (42), das an einer Rolle (5) auf dem Fußteil (15) des feststehenden Trageelements (8) anliegt, so dass es Halbkreisform hat, und verlängert wird durch
. ein drittes Teilstück (43, 44) mit freiem Ende;
- verläuft ein im Fußteil (15) vorgesehenes Führungslangloch (20) im Wesentlichen parallel zu den Schenkeln (13, 14), das aufgrund seiner Länge die Verschiebung des beweglichen Trageelements (9) ermöglicht;
- ist ein Rückhalteelement (26) für den Metalldraht (4) auf dem Verbindungsteil (23) befestigt, das durch das Führungslangloch (20) hindurch geht, so dass es mit dem Ende (45) des ersten Teilstücks (41) des Metalldrahtes (4) in Verbindung steht, wobei das Rückhalteelement (26) so angeordnet ist, dass es im Führungslangloch (20) gleiten kann;
- ist ein mit dem feststehenden Trageelement (8) verbundener Krafterzeuger (7) auf einer Seite des betreffenden Drahtteilstücks (4) angeordnet und in der Lage, eine variable Kraft abzugeben, um den Metalldraht (4) außerhalb des Bereichs des halbkreisförmigen zweiten Teilstücks (42) in seiner Querrichtung zu verformen;
- wobei dieser Krafterzeuger (7) zwischen den beiden Abstützelementen (10) wirkt, die auf das Fußteil (15) des feststehenden Trageelements (8) montiert und auf der anderen Seite des betreffenden Drahtteilstücks angeordnet sind;
- um so über eine unbegrenzt verstellbare Energieabsorptionsvorrichtung zu verfügen, die sich allen Fällen von Zusammenstößen anpasst.

2. - Energieabsorptionsvorrichtung nach Anspruch 1, **dadurch gekennzeichnet, dass** der Krafterzeuger (7) auf das dritte im Wesentlichen gerade Teilstück (43) des Metalldrahtes (4) wirkt.

3. - Energieabsorptionsvorrichtung nach Anspruch 1, **dadurch gekennzeichnet, dass** der Krafterzeuger (7) auf das erste Teilstück (41) des Metalldrahtes (4) wirkt.

4. - Energieabsorptionsvorrichtung nach Anspruch 3, **dadurch gekennzeichnet, dass** das dritte Teilstück (43) des Metalldrahtes (4) im Wesentlichen gerade ist.

5. - Energieabsorptionsvorrichtung nach Anspruch 3, **dadurch gekennzeichnet, dass** das dritte Teilstück (44) des Metalldrahtes (4) um die Rolle (5) herum geschlungen ist.

6. - Energieabsorptionsvorrichtung nach einem der Ansprüche 2 und 3, **dadurch gekennzeichnet, dass** der Krafterzeuger (7) zwischen den beiden eigenständigen Abstützelementen (10) wirkt.

7. - Energieabsorptionsvorrichtung nach einem der Ansprüche 2 und 3, **dadurch gekennzeichnet, dass** der Krafterzeuger (7) zwischen einem eigenständigen Abstützelement (10) und einem in die Rolle (5) integrierten Abstützelement (55) wirkt.

8. - Energieabsorptionsvorrichtung nach einem der Ansprüche 2 und 3, **dadurch gekennzeichnet, dass** der Krafterzeuger (7) zwischen dem eigenständigen Abstützelement (10) und einem von der Rolle (5) gebildeten Abstützelement wirkt.

9. - Energieabsorptionsvorrichtung nach einem beliebigen der vorstehenden Ansprüche, **dadurch gekennzeichnet, dass**
- jeder Schenkel (13, 14) des feststehenden Trageelements (8) ein seitliches Teil (17) mit einem Befestigungsloch (19) hat;
- jeder Schenkel (21, 22) des beweglichen Trageelements (9) ein seitliches Teil (24) mit einem offenen Langloch (25) hat, das sich an das seitliche Teil (17) und das entsprechende Befestigungsloch (19) des feststehenden Trageelements (8) anlegt, wobei die beiden Befestigungslöcher (19) und die beiden Langlöcher (25) ein am Fahrzeugaufbau vorhandenes Befestigungselement aufnehmen;
- das feststehende Trageelement (8) und das bewegliche Trageelement (9) durch eine Verbindungseinheit (11) miteinander verbunden sind, die sich zusammensetzt aus:
. einer ersten Kunststoff-Unterlegscheibe (31) zwischen dem Fußteil (15) und dem Verbindungsteil (23), die einen zylindrischen Zapfen (34) aufnimmt, der zu einer zweiten auf der anderen Seite des Fußteils (15) angeordneten Kunststoff-Unterlegscheibe (32) gehört, wobei dieser zylindrische Zapfen (34) durch das Führungslangloch (20) hindurch geht und in diesem gleitet,
. einer Stahl-Unterlegscheibe (33), die auf der zweiten Kunststoff-Unterlegscheibe (32) sitzt,
. und einem Arretierungselement (38), das die Stahl-Unterlegscheibe (33) mit dem Verbindungsteil (23) verbindet, um die gewünschte Klemmung zu erhalten und so die Verschiebung des beweglichen Trageelements (9) im Falle eines Zusammenstoßes zu ermöglichen.

10. - Energieabsorptionsvorrichtung nach Anspruch 9, **dadurch gekennzeichnet, dass** die Rolle (5) links von der Achse (30) des Führungslanglochs (20) angeordnet ist.

11. - Energieabsorptionsvorrichtung nach Anspruch 9, **dadurch gekennzeichnet, dass** die Rolle (5) rechts von der Achse (30) des Führungslanglochs (20) angeordnet ist.

12. - Energieabsorptionsvorrichtung nach Anspruch 9, **dadurch gekennzeichnet, dass** das Ende (45) des ersten Teilstücks (41) des Drahtes (4) zu einem Haken (47) geformt ist, der vollständig um das Rückhalteelement (26) herum führt, wobei die axiale-Länge der Öffnung (48) des Hakens (47) größer als die axiale Länge des Rückhalteelements (26) ist, um die verzögerte Wirkung der Energieabsorptionsvorrichtung zu gewährleisten.

13. - Energieabsorptionsvorrichtung nach Anspruch 9, **dadurch gekennzeichnet, dass**:
- jedes eigenständige Abstützelement (10) eine kleine von einem Kunststoffkranz (58) umgegebene Rolle (57) ist und auf einer am Fußteil (15) befestigten Achse (59) sitzt, und
- die Rolle (5) von einem Kunststoffkranz (52) umgeben ist und eine Zentrierungsnocke (56) aufweist.

14. - Energieabsorptionsvorrichtung nach Anspruch 9, **dadurch gekennzeichnet, dass** sie eine Verschlussplatte (12) aufweist, bestehend aus einem Fußteil (63), das den Metalldraht (4) und das Fußteil (15) des feststehenden Trageelements (8) abdeckt, sowie aus zwei Schenkeln (61, 62), die die Schenkel (13, 14) des feststehenden Trageelements (8) zwischen sich einfassen, wobei jeder Schenkel (61, 62) mit einem seitlichen Teil (64) versehen ist, das sich an ein entsprechendes seitliches Teil (16) des feststehenden Trageelements (8) anlegt, und jedes Paar aus zwei seitlichen Teilen (61,16-62,16) mit einem Befestigungsloch versehen ist, das ein am Fahrzeugaufbau vorhandenes Befestigungselement aufnimmt; die Verschlussplatte (12) wird mithilfe der Zentrierungsnocke (56) und der Achse bzw. Achsen (59) der kleinen Rolle bzw. Rollen in Position gebracht und ist am Fußteil (15) mithilfe der Befestigungsschraube (54) der Rolle (5) befestigt.

15. - Energieabsorptionsvorrichtung nach Anspruch 14, **dadurch gekennzeichnet, dass** sich der Metalldraht (4) gegen ein Reibungsteil (66) verschiebt, das sich an einem der beiden Schenkel (61, 62) der Verschlussplatte (12) verhakt.

16. - Energieabsorptionsvorrichtung nach einem beliebigen der vorstehenden Ansprüche, **dadurch** gekenn-zeichnet, dass der Krafterzeuger (7) ein pyrotechnischer Krafterzeuger ist.
